# EUROPÄISCHE PATENTSCHRIFT

(11) **EP 0 559 037 B1**
(45) Veröffentlichungstag und Bekanntmachung des Hinweises auf die Patenterteilung: **08.05.1996**
(21) Anmeldenummer: 93102709.8
(22) Anmeldetag: 20.02.1993
(51) Int. Cl.: B08B 9/08, B23Q 1/25

(54) **Einrichtung zum Reinigen von Gebinden**
Cleaning device for containers
Dispositif de nettoyage pour des conteneurs

(30) Priorität: 02.03.1992 CH 638/92
(43) Veröffentlichungstag der Anmeldung: 08.09.1993
(73) Patentinhaber: RIO BEER MASCHINENFABRIK AG, CH-5524 Niederwil (CH)
(72) Erfinder: Beer, Rio, CH-5524 Niederwil (CH)
(74) Vertreter: Fillinger, Peter, Dr.

(56) Entgegenhaltungen:
- EP-A- 0 026 942
- DE-A- 3 320 904
- US-A- 3 150 699
- US-A- 3 460 435

## Beschreibung

Die vorliegende Erfindung bezieht sich auf eine Einrichtung gemäss dem Oberbegriff des Anspruchs 1.

Solche Einrichtungen mit geeigneter Bürste für das Innenreinigen von im Querschnitt rechteckiger Gebinde sind beispielsweise aus der DE-A-33 20 904 bekannt. Der Begriff "Gebinde" bezeichnet vorliegend einen Behälter. Bei der dort gezeigten Einrichtung wird zur Reinigung des Gebindebodens und des Gebindedeckels eine Rotationsbürste vorgeschlagen, die am oberen und unteren Ende gegen die Drehachse konvergierende Borstenflächen mit rechtwinklig eingesetzten Borsten aufweist. Die damit verfolgte Absicht, die relativ steifen Borsten nach oben und unten zu richten, um den Kontakt mit dem Gebindeboden bzw. -deckel während des Reinigungsprozesses zu verbessern, bringt nur einen Teilerfolg. Bei einer zu starken Beschleunigung der Drehzahl der Bürste zur Kürzung des Reinigungsprozesses werden stark verkrustete Farbreste nicht mehr zureichend entfernt, weil sich die Borsten radial zur Drehachse orientieren.

Die gattungsfremde US-A-3 460 435 zeigt ein numerisch gesteuertes Bearbeitungszentrum zur spangebenden Bearbeitung von Werkstücken, bei dem sowohl die Motoren als auch die Zahnradgetriebe der Umgebungsatmosphäre zugänglich sind. Wegen der Kontaktfunkenbildung bei den Motoren sowie der Gefahr einer Schlagfunkenbildung in den Zahngetrieben im Falle einer Blockierung der Maschine kann folglich eine solche Vorrichtung nicht in einer explosiven Umgebungsatmosphäre eingesetzt werden.

Ausgehend von diesem Sachverhalt stellte sich die vorliegende Erfindung die Aufgabe, eine Einrichtung gemäss der DE-A-33 20 904 derart zu verbessern, dass auch stark verkrustete Gebinde im Bereich des Bodens, des Deckels und der Ecken in kürzerer Zeit gereinigt werden können.

Erfindungsgemäss wird diese Aufgabe gelöst durch die kennzeichnenden Merkmale des Anspruchs 1.

Anhand der beiliegenden schematischen Zeichnung wird die Erfindung beispielsweise erläutert. Es zeigen:
- Fig. 1: einen Aufriss eines Ausführungsbeispiels,
- Fig. 2: eine Seitenansicht zu einem Teil der Fig. 1 und
- Fig. 3: eine gleiche Ansicht wie Fig. 2 in einer anderen Betriebsstellung.

Die Einrichtung weist zwei kolbenstangenlose, pneumatisch betätigbare Zylinder 1 und 2 auf, deren Fussende an einer Grundplatte 3 befestigt ist. Die Grundplatte 3 kann Teil eines ortsfesten oder transportablen Maschinengestells oder Teil einer Reinigungsstrasse sein. Die Kopfenden der Zylinder 1 und 2 sind durch ein Joch 4 fest verbunden. Mit der Grundplatte 3 und dem Joch 4 ist ferner eine Führungssäule 24 in Form von zwei Führungsstangen oder dgl. fest angeordnet, an der vertikal verschiebbar ein Schlitten 5 gelagert ist. Dieser ist mittels Trägern 6 an den Kolben der Zylinder 1 und 2 befestigt. Parallel zu den Zylindern 1 und 2 ist im Schlitten 5 eine Welle 7 drehbar gelagert, die durch einen ebenfalls am Schlitten 5 befestigten Motor 8 in einer oder alternierend in beiden Drehrichtungen mit beliebigem Geschwindigkeits-Zeitdiagramm antreibbar ist. Die Welle 7 ist weiter in einem Lager 9 in der Grundplatte 3 achsial und radial geführt. Sie durchdringt ferner eine Bohrung 10 in einem Spritzdeckel 11. Dieser ist durch nicht dargestellte Mittel vertikal auf und ab verschiebbar und wird für einen Reinigungsvorgang durch nicht dargestellte Mittel auf das strichpunktiert eingezeichnete Gebinde 12 aufgelegt und anschliessend wieder abgehoben.

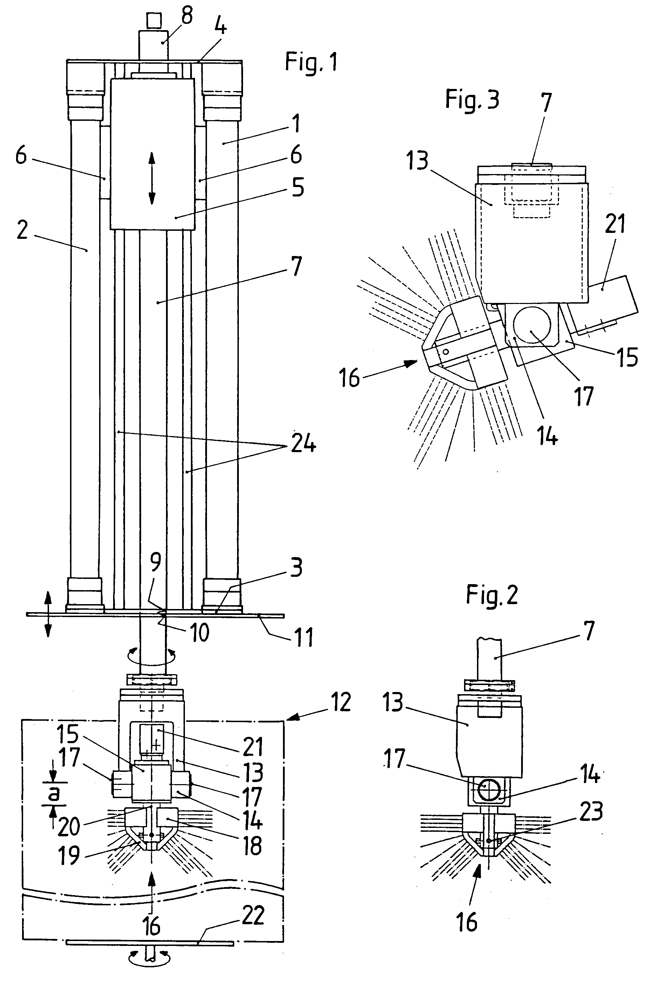

Am unteren Ende der Welle 7 ist der Quersteg eines U-förmigen Körpers 13 angeflanscht, der ein zur Welle 7 quer (rechtwinklig) orientiertes Schwenklager 14 aufweist, in dem zwei seitliche Achszapfen 17 eines Drehlagers 15 für eine Rotationsbürste 16 schwenkbar gelagert sind. Durch nicht dargestellte, im Schwenklager 14 untergebrachte hydraulische oder pneumatische Antriebsmittel kann das Drehlager 15 mit der Bürste 16 von einer ersten Stellung - in der, wie die Fig. 1 und 2 zeigen, die Bürstendrehachse koachsial zur Welle 7 ausgerichtet ist - um einen Winkel von 70° bis 90° (vorzugsweise 80°) in eine zweite Stellung verschwenkt werden. Die Antriebsmittel können die Schwenkbewegung des Schwenklagers kontinuierlich von der ersten gegen die zweite Stellung und zurück bewegen oder erforderlichenfalls in jeder beliebigen Stellung für eine gewünschte Zeitdauer anhalten.

Die Bürste 16 weist einen ihrem Drehlager 15 näheren Abschnitt 18 gleichmässigen Durchmessers sowie einen verjüngten Abschnitt 19 auf. Beide Abschnitte 18 und 19 sind in Umfangsrichtung in bekannter Art (siehe beispielsweise CH-A-658 578) in Segmente unterteilt und mit einem Borstenbesatz unterschiedlicher Borstenlänge versehen. Borstenlänge, -querschnitt und -material sind ebenfalls in der genannten Patentschrift beispielsweise beschrieben. Der Abstand "a" der Achse des Schwenklagers 14 von der nächstliegenden Borstenschicht des Borstenbesatzes beträgt 150 bis 250 vorzugsweise um die 200 Millimeter. Die Bürste 16 kann weiter mit Düsen 23 ausgerüstet sein, durch die mit Hochdruck ein Lösungs- oder Reinigungsmittel in radialer Richtung austritt.

Die Bürste 16 ist mit einer Stummelwelle 20 im Drehlager 15 gelagert und von einem an diesem befestigten, vorzugsweise hydraulisch oder pneumatisch angetriebenem Motor 21 antreibbar. Fig. 3 zeigt, dass das Drehlager 15, die Bürste 16 und der Motor 21 eine im Schwenklager 14 schwenkbar gelagerte Baueinheit bilden.

Die beschriebene Vorrichtung funktioniert wie folgt. Ein zu reinigendes Gebinde 12 wird zur Reinigung in der achsialen Verlängerung der Welle 7 auf ein Gebindeauflager 22 gestellt und darauf mit nicht dargestellten Mitteln festgehalten. Die Füllöffnung des Gebindes 12 wird dabei koaxial mit der Welle 7 ausgerichtet. Danach wird die Welle 7 gegen das Auflager 22 abgesenkt, bis sich die Bürste und der Lagerkörper 13 innerhalb des Gebindes 12 befinden. Anschliessend wird der Spritzdeckel 11 gesenkt und die Füllöffnung verschlossen. Das Absenken der Welle 7 erfolgt durch ein Betätigen der Zylinder 1 und 2. Das Lösungs- oder Reinigungsmittel kann bereits vorher in das Gebinde 12 gebracht worden sein oder nach dem Absenken der Bürste 16 durch deren Düsen 23 eingebracht werden. Ist das Gebinde 12 verschlossen, wird der Motor 8 und/oder 21 in Gang gesetzt, der die Welle 7 mit der Bürste 16 mit vorzugsweise periodisch wechselnder Drehrichtung antreibt. Durch ein periodisches Auf- und Abbewegen der Welle 7 mittels der Zylinder 1 und 2 werden die Seitenwände und der Boden des Gebindes 22 innenseitig gereinigt. Für das Reinigen seiner oberen Begrenzungswand werden beide Motoren 8 und 21 eingeschaltet und zusätzlich wird der Schwenkantrieb für das Drehlager 15 und der Motor 21 aktiviert. Die Betätigung des Schwenkantriebes ist derart, dass die Drehachse der Bürste 16 periodisch aus ihrer lotrechten, ersten Stellung in die zweite, in Fig. 3 gezeigte Stellung und wieder zurück verschwenkt wird bis die obere Abschlusswand und die angrenzenden Ecken vollständig gereinigt sind. Beim beschriebenen Ausführungsbeispiel ist es auch möglich, während der Reinigung der Seitenwände der Drehzahl der Welle 7 durch ein Aktivieren des Motors 21 der Bürste 16 eine zusätzliche Drehbewegung zu überlagern.

Nach einem nicht dargestellten Ausführungsbeispiel ist es indessen auch möglich, die Welle 7 als im Schlitten 5 unbeweglich gehaltene Achse zu gestalten und stattdessen das Gebindeauflager 22 um die Verlängerung der Längsmittelachse der Welle 7 drehen zu lassen. Bei dieser Ausführungsform wird während der Reinigung der Seitenwände die Drehbewegung der Bürste 16 ausschliesslich durch den Motor 21 erzeugt, wogegen, beim Reinigen der oberen Abschlusswand die relative Drehbewegung des Gebindes 12 um die Achse 7 durch ein Drehen des Gebindeauflagers 22 erzeugt wird.

Nach einem weiteren nicht dargestellten Ausführungsbeispiel ist die Welle 7 mit der Bürste nicht und stattdessen das Gebindeauflager 22 vertikal auf und ab verschiebbar.

Weiter kann vorgesehen sein, die Grundplatte 3 mit der Führungssäule 24, dem Joch 4, den Zylindern 1 und 2 sowie dem Schlitten 5 und der Welle 7 und/oder das Gebindeauflager 22 je an einem Kreuzschlitten zu lagern, damit die Bürste beliebigen Konturen des zu reinigenden Gebindes folgen kann.

## Patentansprüche

1. Einrichtung zum Reinigen von Gebinden mit einer Achse (7) und einem Gebindeauflager (22), welche in Richtung der Achse (7) relativ zu- bzw. voneinander beweglich sind, wobei am dem Gebindeauflager (22) zugewandten Ende der Achse (7) eine Rotationsbürste (16) vorhanden ist, dadurch gekennzeichnet, dass an diesem Ende der Achse (7) ein quer orientiertes Schwenklager (14) vorhanden ist, dass ein Drehlager (15) für die Rotationsbürste (16) in diesem Schwenklager (14) gelagert und mit einem Schwenkantrieb versehen ist, dass zusätzlich zu einem Antriebsmotor (21) für die Rotationsbürste (16) weitere Mittel (8) vorhanden sind, um zwischen der Achse (7) und dem Gebindeauflager (22) eine relative Drehbewegung mit vorzugsweise wechselnder Drehrichtung zu erzeugen, dass das Drehlager (15), die Rotationsbürste (16) und ihr Antriebsmotor (21) eine Baueinheit bilden und dass diese Baueinheit im Schwenklager (14) gelagert ist.

2. Einrichtung nach Anspruch 1, dadurch gekennzeichnet, dass die Mittel ein zweites Drehlager (5) sowie einen Drehantrieb (8) für die als Welle gestaltete Achse (7) mit vorzugsweise wechselnder Drehrichtung aufweisen.

3. Einrichtung nach Anspruch 1, dadurch gekennzeichnet, dass die Mittel ein Drehlager und einen Drehantrieb für das Gebindeauflager (22) mit vorzugsweise wechselnder Drehrichtung aufweisen.

4. Einrichtung nach einem der Ansprüche 1 bis 3, dadurch gekennzeichnet, dass der Schwenkantrieb für das Drehlager im Schwenklager (14) untergebracht ist.

5. Einrichtung nach Anspruch 1, 2 oder 4, dadurch gekennzeichnet, dass der Abstand (a) von der Achse des Schwenklagers (14) zu der nächstliegenden Borstenschicht der Rotationsbürste (16) näherungsweise 200 Millimeter beträgt.

6. Einrichtung nach Anspruch 1, dadurch gekennzeichnet, dass die Rotationsbürste (16) bis zu einem Winkel von mindestens 80° zur Achse (7) schwenkbar ist.

7. Einrichtung nach einem der Ansprüche 1 bis 6, dadurch gekennzeichnet, dass die Achse bzw. Welle (7) achsial gegen das Gebindeauflager (22) bzw. von diesem weg verschiebbar gelagert ist.

8. Einrichtung nach einem der Ansprüche 1 bis 7, dadurch gekennzeichnet, dass die Achse bzw. Welle (7) und/oder das Gebindeauflager (22) wenigstens in Richtung von einer von zwei sich mit der Achse bzw. Welle (7) rechtwinklig schneidenden Geraden hin und her verschiebbar gelagert ist.

## Claims

1. A device for cleaning enclosures, comprising a spindle (7) and an enclosure seating (22), which are movable relatively towards or away from each other in the direction of the spindle (7), and a rotary brush (16) at the end of the spindle facing towards the enclosure seating (22), **characterized in that** a transversely oriented pivot mount (14) is provided at this end of the spindle (7), that a rotary mount (15) for the rotary brush (16) is mounted in this pivot mount (14) and provided with a pivot drive, that in addition to a drive motor (21) for the rotary brush (16) further means (8) are provided to generate a relative rotary movement, preferably with changing rotary direction, between the spindle (7) and the enclosure seating (22), that the rotary mount (15), the rotary brush (16) and its drive motor (21) are one integral unit, and that this integral unit is mounted in the pivot mount (14).

2. A device according to Claim 1, **characterized in that** the means comprise a second rotary mount (5) as well as a rotary drive (8) for the spindle (7), which is designed as a shaft, preferably with changing rotary direction.

3. A device according to Claim 1, **characterized in that** the means comprise a rotary mount and a rotary drive for the enclosure support (22), preferably with changing rotary direction.

4. A device according to one of Claims 1 to 3, **characterized in that** the pivot drive for the rotary mount is accommodated in the pivot mount (14).

5. A device according to Claim 1, 2 or 4, **characterized in that** the distance (a) between the spindle of the pivot mount (14) and the nearest bristle arrangement of the rotary brush (16) is as little as 200 millimetre.

6. A device according to Claim 1, **characterized in that** the rotary brush (16) is pivotal up to an angle of at least 80° relative to the spindle (7).

7. A device according to one of Claims 1 to 6, **characterized in that** the spindle or shaft (7) is mounted so as to be axially displaceable relative to the enclosure seating (22) or away from the latter.

8. A device according to one of Claims 1 to 7, **characterized in that** the spindle or shaft (7) and/or the enclosure seating (22) is/are mounted so as to be displaceable at least in the direction of one of two straights which intersect at right angles with the spindle or shaft (7).

## Revendications

1. Installation pour nettoyer des réceptacles, comprenant un axe (7) et un appui de réceptacle (22) mobiles dans la direction de l'axe (7), relativement l'un par rapport à l'autre, et l'extrémité de l'axe (7) tournée vers l'appui (22) comporte un balai rotatif (16), caractérisée en ce qu'à cette extrémité de l'axe (7) il est prévu un palier pivotant (14) orienté transversalement et un palier à rotation (15) pour le balai rotatif (16) est prévu dans ce palier pivotant (14) et comporte un entraînement en pivotement, et en plus d'un moteur d'entraînement (21) pour le balai rotatif (16), d'autres moyens (8) sont prévus pour créer entre l'axe (7) et l'appui (22) un mouvement de rotation relatif à sens de rotation de préférence alternant, et en ce que le palier (15), le balai rotatif (16) et son moteur (31) forment un ensemble qui est monté dans le palier pivotant (14).

2. Installation selon la revendication 1, caractérisée en ce que les moyens comprennent un second palier rotatif (5) ainsi qu'un entraînement en rotation (8) pour l'axe (7) en forme d'arbre avec de préférence un sens de rotation alterné.

3. Installation selon la revendication 1, caractérisée en ce que les moyens comprennent un palier rotatif et un entraînement en rotation pour l'appui (22) avec de préférence un sens de rotation alterné.

4. Installation selon l'une des revendications 1 à 3, caractérisée en ce que l'entraînement pivotant pour le palier de rotation est logé dans le palier pivotant (14).

5. Installation selon la revendication 1, 2, 4, caractérisée en ce que la distance (a) de l'axe du palier pivotant (14) par rapport à la couche la plus proche des brosses du balai rotatif (16) est approximativement de 200 millimètres.

6. Installation selon la revendication 1, caractérisée en ce que le balai rotatif (16) est pivotant jusqu'à un angle d'au moins 80° par rapport à l'axe (7).

7. Installation selon l'une des revendications 1 à 6, caractérisée en ce que l'axe ou l'arbre (7) est monté coulissant axialement par rapport au support (22) pour s'en écarter ou s'en rapprocher.

8. Installation selon l'une des revendications 1 à 7, caractérisée en ce que l'axe ou l'arbre (7) et/ou l'appui (22) sont montés coulissants alternativement dans la direction de l'une des deux droites qui se coupent à angle droit avec l'axe ou l'arbre (7).
